# EUROPÄISCHE PATENTANMELDUNG

(11) **EP 0 943 493 A2**
(43) Veröffentlichungstag der Anmeldung: **22.09.1999**
(21) Anmeldenummer: 99104269.8
(22) Anmeldetag: 03.03.1999
(51) Int. Cl.: B60R 7/05, B60J 3/02

(54) **Sonnenblende für ein Fahrzeug**

(30) Priorität: 14.03.1998 DE 19811164
(71) Anmelder: Volkswagen Aktiengesellschaft, 38436 Wolfsburg (DE)
(72) Erfinder: Strüken, Volker, 38527 Meine (DE)

(57) **Zusammenfassung**

Die Erfindung betrifft eine Sonnenblende (1; 25) für ein Fahrzeug, das einen flachen, langgestreckten Sonnenblendenkörper (2; 26) umfaßt, an dessen einer Längsschmalseite (13; 31, 32) eine Schwenkachse (4; 30) für eine schwenkbare Befestigung in einem Fahrzeug angebracht ist. Die Sonnenblende (1; 25) umfaßt ferner wenigstens ein aufklappbares und verriegelbares Aufnahmefach für eine Halterung und/oder Aufbewahrung von Gegenständen (19, 20, 23). Erfindungsgemäß ist der Sonnenblendenkörper (2; 26) etwa in einer Längsmittenebene geteilt und zweiteilig als Etui ausgebildet, wobei das erste Etuiteil (6; 28) und das zweite Etuiteil (7; 29) durch eine Klappachse (8; 30) an zugeordneten Längsschmalseiten (9, 10; 31, 32) aufklappbar verbunden sind und ein Innenbereich wenigstens eines Etuiteils (6, 7; 28, 29) als Aufnahmefach oder Haltetung ausgebildet ist.

## Beschreibung

Die Erfindung betrifft eine Sonnenblende für ein Fahrzeug nach dem Oberbegriff des Anspruchs 1.

Es ist allgemein bekannt, an Sonnenblenden weitere Funktionsteile, insbesondere Spiegel, Beleuchtungen, Abdeckklappen, Taschen, Aufnahmekassetten für Gegenstände, etc. anzubringen oder in Sonnenblendenkörper zu integrieren.

Bei einer bekannten Sonnenblende ist in einer Ausnehmung an einer Breitseite des Sonnenblendenkörpers eine Spiegelkassette mit aufklappbarer Spiegelabdeckung befestigt (US-PS 3 926 470). Hier ist nur eine Breitseite der Sonnenblende für eine zusätzliche Funktion als Spiegelkassettenhalterung ausgenützt.

Weiter ist es bei einer gattungsgemäßen Sonnenblende bekannt (DE 83 22 585 U1), in den Sonnenblendenkörper ein Aufnahmefach mit einem aufklappbaren und verriegelbaren Deckel zur Aufnahme von Dokumenten zu integrieren. Auch hier ist nur ein Teil einer Breitseite des Sonnenblendenkörpers für eine zusätzliche Funktion genutzt.

Zudem ist es bekannt, in einer Ausnehmung eines Sonnenblendenkörpers oder als Verlängerung des Sonnenblendenkörpers ein multifunktionales elektronisches Bauteil über Adapter anzubringen. Dieses elektronische Bauteil, insbesondere mit einer Tastatur ist hier ungünstig ständig sichtbar und nicht abgedeckt.

Weiter ist es bekannt, mit lösbaren Gurtbändern Gegenstände und Funktionsteile an einem Sonnenblendenkörper nachträglich und lösbar anzubringen, wie beispielsweise einen Kassettenhalter (US 4 844 311), eine Tasche mit Brillenhalter und Schreibgerätefächem (EP 0 628 451 A1) oder ein aufklappbares Make-up-Etui mit einem Spiegel und Make-up-Utensilien (WO 94 09 671 A1). Solche nachträglich an einem Sonnenblendenkörper angebundene Gegenstände sind meist unansehnlich, wenig professionell und sicherheitstechnisch problematisch.

Aufgabe der Erfindung ist es, die Sonnenschutzfunktion einer gattungsgemäßen Sonnenblende mit einfachen Mitteln in einer optisch günstigen Lösung zu erweitern.

Diese Aufgabe wird mit den Merkmalen des Anspruchs 1 gelöst.

Gemäß Anspruch 1 ist der Sonnenblendenkörper in einer Längsmittenebene geteilt und zweiteilig als Etui ausgebildet. Dabei sind das erste Etuiteil und das zweite Etuiteil durch eine Klappachse an zugeordneten Längsschmalseiten aufklappbar verbunden und ein Innenbereich wenigstens eines Etuiteils ist als Aufnahmefach oder Halterung ausgebildet.

Da hier die gesamte Sonnenblende zweigeteilt und als Etui ausgebildet ist, kann ein Großteil des Innenvolumens des Sonnenblendenkörpers für die Aufnahme und Halterung von Gegenständen hergerichtet und verwendet werden, so daß die Aufnahmefähigkeit gegenüber herkömmlichen Ausbildungen vergrößerbar ist. Dabei kann in an sich bekannter Weise Kunststoffschaum als Material für den Sonnenblendenkörper verwendet werden, der ggf. außen und/oder innen mit einem Bezugstoff überzogen sein kann.

Im zugeklappten Zustand der beiden Eutiteile ist die Sonnenblende optisch ansehnlich, ohne daß ihr die erweiterte Funktion ihres Innenvolumens anzusehen ist. Die beiden Etuiteile des Sonnenblendenkörpers können wie bei einem gewöhnlichen, tragbaren Etui einfach und bequem aufgeklappt werden, wobei dann der Etuiinhalt für eine Benutzung in geeigneter Weise präsentiert wird.

Die Etuiteile können grundsätzlich in ihrer Geschlossenstellung mit einer Vielzahl an sich bekannter Verschlüsse und Verriegelungen aneinander gehalten werden. Vorzugsweise wird ein üblicher, federvorgespannter Etuischnappverschluß verwendet, der etwa in der Längsmitte angebracht ist und der durch Drücken oder Verschieben eines Betätigungselements geöffnet werden kann und der beim Zuklappen der Etuiteile selbsttätig zuschnappt.

In einer bevorzugten Ausführungsform ist die Klappachse an der der Schwenkachse gegenüberliegenden Längsschmalseite angeordnet. Hier kann bei einer insgesamt nach unten geschwenkten Sonnenblende ein Etuiteil nochmals nach unten ausgeklappt werden, dergestalt, daß beide Innenbereiche der Etuiteile einem Benutzer in bequemer Reichweite gegenüberliegen.

In einer alternativen Ausführungsform kann die Klappachse an der gleichen Längsschmalseite wie die Schwenkachse angeordnet sein. Je nach den Gegebenheiten in einem speziellen Fahrzeug können auch hier geeignete Aufschwenkstellungen zur Verfügung stehen. Bei einer solchen Ausführungsform kann vorteilhaft die Schwenkachse zugleich als Klappachse verwendet werden, so daß sich ein besonders kostengünstiger Aufbau ergibt.

Eine geeignete Ausrüstung für die etuiförmige Sonnenblende besteht darin, daß an einer Innenbreitseite des ersten Etuiteils ein Make-up-Spiegel ggf. mit Beleuchtung insbesondere als Spiegelkassette und an der Innenbreitseite des zweiten Etuiteils Einsteckfächer und Haltelaschen insbesondere für Make-up-Utensilien angebracht sind. Die etuiförmige Sonnenblende kann jedoch auch für andere Zwecke ausgerüstet sein und beispielsweise Klemmlaschen oder Halteschlaufen für Tickets und Dokumente enthalten. Dabei kann die Sonnenblende ggf. auch abschließbar ausgeführt werden. Solche Ausführungen mit individuell wählbaren Ausrüstungen eignen sich besonders für eine Nachrüstung und einen Austausch von einfacheren, ggf. serienmäßigen Sonnenblenden.

Für unterschiedliche Ausrüstungen und Kombinationen ist es vorteilhaft, die Etuiteile in ihrer Außenform als jeweils gleiche Schalenteile auszubilden, die im Innenbereich mit unterschiedlichen Einsätzen bevorzugt als einrastbare Kassetten bestückbar sind.

Anhand einer Zeichnung wird die Erfindung näher erläutert.

Es zeigen:
Fig. 1 eine erste Ausführungsform einer Sonnenblende für ein Fahrzeug, und
Fig. 2 eine zweite Ausführungsform einer Sonnenblende für ein Fahrzeug.

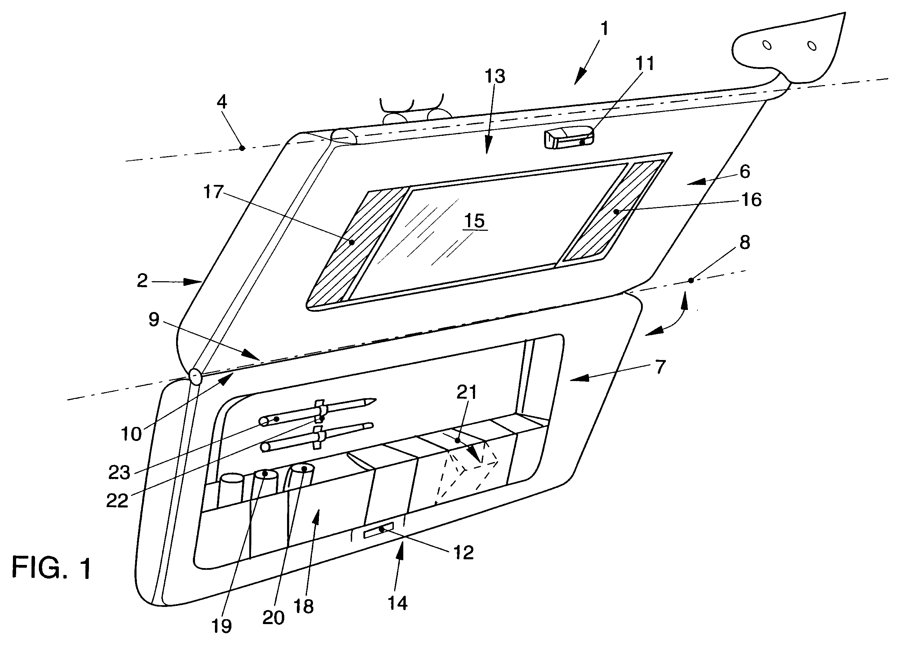

In der Fig. 1 ist eine Sonnenblende 1 für ein Fahrzeug schematisch dargestellt. Diese Sonnenblende 1 umfaßt einen flachen, langgestreckten Sonnenblendenkörper 2, an dessen einer Längsschmalseite 13 eine Schwenkachse 4 für eine schwenkbare Befestigung des Sonnenblendenkörpers 2 in einem Bereich oberhalb einer Windschutzscheibe eines Fahrzeugs angebracht ist.
Der Sonnenblendenkörper 2 ist in einer Längsmittenebene geteilt und zweiteilig als Etui ausgebildet, wobei ein erstes Etuiteil 6 und ein zweites Etuiteil 7 durch eine Klappachse 8 an einander zugeordneten Längsschmalseiten 9, 10 aufklappbar verbunden sind. Somit ist die Klappachse 8 an der der Schwenkachse 4 gegenüberliegenden Längsschmalseite 9 des ersten Etuiteils 6 angeordnet.

Das erste Etuiteil 6 und das zweite Etuiteil 7 sind bezüglich ihrer Außenform als Gleichteile ausgebildet. Für eine Verriegelung der beiden Etuiteile 6, 7 ist an der der Klappachse 8 gegenüberliegenden Längsschmalseite 13 des ersten Etuiteils 6 ein Schnappverschlußriegel 11 angeordnet, der im zusammengeklappten Zustand der beiden Etuiteile 6, 7 mit einer Schnappverschlußfalle 12 zusammenwirkt, die an einer der Klappachse 8 gegenüberliegenden Längsschmalseite 14 des zweiten Etuiteils 7 angeordnet ist.

Die Innenbereiche der beiden Etuiteile 6, 7 sind als Aufnahmefach oder Halterung ausgebildet. So ist die Innenbreitseite des ersten Etuiteils 6 mit einem Make-up-Spiegel 15 versehen, an dessem linken und rechten Seitenrandbereich jeweils eine zu- und abschaltbare Leuchte 16, 17 angeordnet ist.

An der Innenbreitseite des zweiten Etuiteils 7 sind eine Reihe von Einsteckfächem 18 ausgebildet, so z. B. für Schminktöpfe 19 oder Lippenstifte 20. Diese Einsteckfächer 18 können ggf. auch ausklappbar angeordnet sein, wie dies in der Fig. 1 durch den Pfeil 21 angedeutet ist. Ferner sind an dieser Innenbreitseite des zweiten Etuiteils 7 Haltelaschen 22 angebracht, in denen z. B. Augenbrauenstifte 23 gehalten sind.

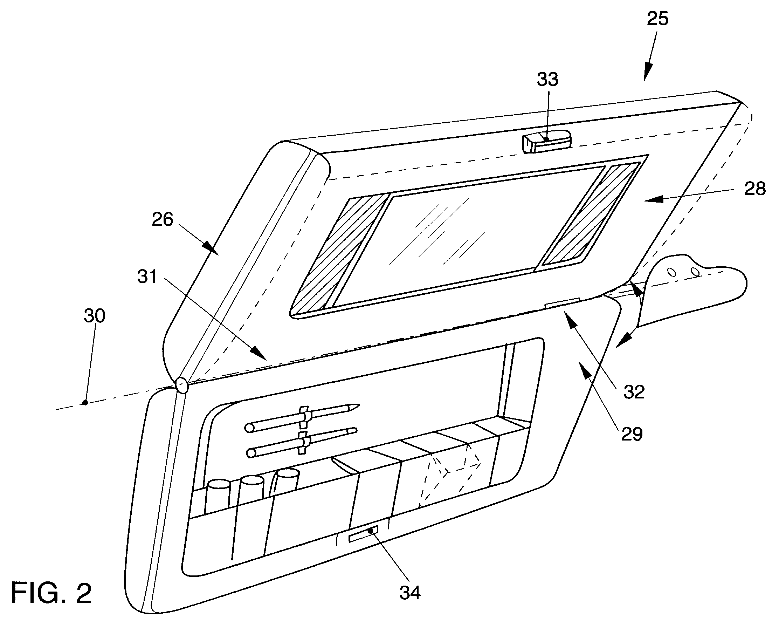

In der Fig. 2 ist eine alternative Ausführungsform einer Sonnenblende 25 schematisch dargestellt. Bei dieser Sonnenblende 25 ist ein Sonnenblendenkörper 26 ebenfalls in einer Längsmittenebene geteilt und zweiteilig als Etui ausgebildet. Ein erstes Etuiteil 28 und ein zweites Etuiteil 29 sind durch eine Klappachse 30 an einander zugeordneten Längsschmalseiten 31, 32 aufklappbar verbunden. Die Innenbereiche dieser Etuiteile 28, 29 sind wiederum entsprechend der in der Fig. 1 dargestellten Ausführungsform als Aufnahmefach oder Halterung ausgebildet. Die Klappachse 30 ist bei dieser in der Fig. 2 dargestellten Ausführungsform der Sonnenblende 25 gleichzeitig als Schwenkachse für eine schwenkbare Befestigung des Sonnenblendenkörpers 26 in einem Bereich oberhalb einer Windschutzscheibe eines Fahrzeugs verwendet.

In der Fig. 2 ist die Sonnenblende 25 mit durchgezogenen Linien in ihrer aufgeklappten Position dargestellt, bei der das zweite Etuiteil 29 um die Klappachse 30 von dem ersten Etuiteil 28 weggeklappt ist. Weiter ist in der Fig. 2 mit strichlierten Linien das zweite Etuiteil 29 auf das erste Etuiteil 28 geklappt dargestellt. In dieser zusammengeklappten Position des Sonnenblendenkörpers 26 rastet ein Schnappverschlußriegel 33 in einer Schnappverschlußfalle 34 ein und hält die beiden Etuiteile 28, 29 zusammen.

## Patentansprüche

1. Sonnenblende für ein Fahrzeug,
mit einem flachen, langgestreckten Sonnenblendenkörper, an dessen einer Längsschmalseite eine Schwenkachse für eine schwenkbare Befestigung in einem Fahrzeug angebracht ist, und mit wenigstens einem aufklappbaren und verriegelbaren Aufnahmefach für eine Halterung und/oder Aufbewahrung von Gegenständen, dadurch gekennzeichnet,
daß der Sonnenblendenkörper (2; 26) etwa in einer Längsmittenebene geteilt und zweiteilig als Etui ausgebildet ist, wobei das erste Etuiteil (6; 28) und das zweite Etuiteil (7; 29) durch eine Klappachse (8; 30) an zugeordneten Längsschmalseiten (9, 10; 31, 32) aufklappbar verbunden sind und ein Innenbereich wenigstens eines Etuiteils (6, 7; 28, 29) als Aufnahmefach oder Halterung ausgebildet ist.

2. Sonnenblende nach Anspruch 1,
dadurch gekennzeichnet,
daß gegenüber der Klappachse (8; 30) bevorzugt etwa in der Längsmitte an den Etuiteilen (6, 7; 28, 29) Schnappverschlußelemente (11, 12; 33, 34) für eine gegenseitige Verriegelung angeordnet sind.

3. Sonnenblende nach Anspruch 1 oder Anspruch 2,
dadurch gekennzeichnet,
daß die Klappachse (8) an der der Schwenkachse (4) gegenüberliegenden Längsschmalseite (9) angeordnet ist.

4. Sonnenblende nach Anspruch 1 oder Anspruch 2,
dadurch gekennzeichnet,
daß die Klappachse (30) an der gleichen Längsschmalseite (31, 32) wie die Schwenkachse angeordnet ist.

5. Sonnenblende nach Anspruch 4,
dadurch gekennzeichnet,
daß die Schwenkachse zugleich auch als Klappachse (30) verwendet ist.

6. Sonnenblende nach einem der Ansprüche 1 bis 5,
dadurch gekennzeichnet,
daß an einer Innenbreitseite des ersten Etuiteils (6; 28) ein Make-up-Spiegel (15) und/oder eine Beleuchtung (16, 17) bevorzugt als Spiegelkassette angebracht ist.

7. Sonnenblende nach einem der Ansprüche 1 bis 6,
dadurch gekennzeichnet,
daß an einer Innenbreitseite des zweiten Etuiteils (7; 29) Einsteckfächer (18) und Haltelaschen (22) insbesondere für Make-up-Utensilien (19, 20, 23) angebracht sind.

8. Sonnenblende nach einem der Ansprüche 1 bis 7,
dadurch gekennzeichnet,
daß die Etuiteile (6, 7; 28, 29) in ihrer Außenform als gleiche Schalenteile ausgebildet sind, die im Innenbereich unterschiedlich bestückbar sind.
